# EUROPEAN PATENT APPLICATION

(11) **EP 4 412 046 A1**
(43) Date of publication of application: **07.08.2024**
(21) Application number: 24155638.0
(22) Date of filing: 02.02.2024
(51) Int. Cl.: H02K 1/2798, H02K 15/03, B32B 27/08, B32B 27/20

(54) **AXIAL FLUX MACHINE ROTOR**

(30) Priority: 03.02.2023 GB 202301561
(71) Applicant: Evolito Ltd, Bicester, Oxford Oxfordshire OX25 2PA (GB)
(72) Inventor: PORTER, Joel, Oxford, OX25 2PA (GB); WALKER, Sam, Oxford, OX25 2PA (GB); MILLER, Chris, Oxford, OX25 2PA (GB)
(74) Representative: Marks & Clerk LLP

(57) **Abstract**

A rotor for an axial flux machine, the rotor comprising: a disc-shaped rotor body having an axis of rotation, the disc-shaped rotor body formed of a fibre reinforced composite material and having an opening at the axis of rotation; a plurality of permanent magnets mounted to a first face of the rotor body circumferentially around the axis of rotation, the plurality of permanent magnets arranged in a Halbach array configuration.

## Description

### Technical Field

The present disclosure relates to rotor bodies, rotors, rotor assemblies and axial flux machines.

### Background

The move away from internal combustion engines to more electric machines, though initially focussed on automotive applications for land-based vehicles, is now finding a new focus in the demanding applications of aerospace. Because lifting mass is costly, research effort is turning to maximise efficiencies, torque, speed and reducing mass of electric machines for aerospace applications where highest power density coupled with reliability are well understood pre-requisites in this industry.

For many years radial flux motors / generators dominated aerospace electric machines, despite the invention of a different, axial flux topology. Several reasons can be attributed to the slow rise of axial flux machines, still in their infancy in aerospace, not least difficulty in displacing incumbent, known reliability technologies, but also not helped by challenges in efficient and consistent techniques for production. Axial flux electric machines present considerable challenges in manufacture and yet arguably, provide the best power dense topology for many aerospace drive, lift and generator applications, operating at speeds and torques that suit turbine, prop, and blade, drive sources. Advances continue to be made in axial flux topology, particularly improving power density and manufacturing techniques.

An axial flux permanent magnet machine typically has disc- or ring-shaped rotor and stator structures arranged about an axis. The stator comprises a set of coils each of which may be parallel to the axis. The rotor bears a set of permanent magnets and is mounted on a bearing so that it can rotate about the axis driven by fields from the stator coils.

Rotor stages typically comprise a hub region and an annular ring, the annular ring being of soft magnetic material and used to convey magnetic flux between adjacent magnets, the magnets being surface mounted and spaced circumferentially around the rotor stage annular ring and disposed axially, i.e., parallel the rotation axis of the rotor. High rotational rotor speeds generate high centripetal force on rotor stages particularly on surface mounted magnets and loss of magnet adhesion is a risk for this motor topology. It is possible for the annulus and hub regions to be continuous, made of the same material and is typically a ferromagnetic steel `backplane', however ferromagnetic steel is conductive and eddy current losses are generated during use. To reduce eddy currents, it is possible for the annular ring to hold a soft magnetic material, the soft magnetic material being soft magnetic powder composite or laminated electrical steel, the soft magnetic material being substantially capable of carrying magnetic flux between adjacent surface mounted magnets, but suppresses current flow in this same plane, it being of high electrical resistance in a plane substantially radial to the motor axis. The term high electrical resistance here is used to in the context of the inability of an electrical current to cross layers of steel laminate which are separated by layers of insulating material to segment the conductive material into smaller sections. In the case of powdered materials, these may be coated in an insulating material such as glass for the same reason. Though bringing advantages of stiffness and eddy current reduction, backplanes add mass to rotors and reduce power density of these electric machines.

A topology not requiring rotor backplanes are double stator single rotor axial flux motors wherein said single rotor contains magnets disposed circumferentially with pole faces, facing across air gaps to stator electromagnetic coils similarly disposed. Double stator machines preferably have rotors comprising a non-magnetic matrix, the matrix having embedded magnets disposed circumferentially, the magnets having their pole faces aligned predominantly parallel the axis of rotation, the magnetic north and south-pole faces facing across air gaps towards the stators. Such rotors are usually axially and radially mass symmetric.

Double stator, single rotor axial flux machines benefit from substantially equal magnetic forces applied when at rest, and when in use, as the rotor acts cooperatively with both stators and the magnetic field induced axial forces on the rotor are substantially balanced. Double stator, single rotor machines do not need a rotor magnetic yoke to carry permanent magnets, hence saving of yoke weight, and because axial forces are substantially balanced a rotor for such a machine can be of comparatively low stiffness. However, these advantages come at the cost of two stators and their back yokes, which when assembled are typically of greater mass and axial length than single stator, double rotor axial flux machines. US2009072639A1 teaches Fig 6, a double stator single rotor topology, with a rotor enhanced for high-speed operation using a carbon fibre tow wrapped around the rotor periphery to contain magnets against substantial centrifugal forces. But despite increase in power output through rotor speed, this does not counter additional mass accompanying double stators and increased machine length, and highest power density is not usually sought from this axial machine topology.

However, to obtain a short axial length for a double rotor single stator axial machine, the rotor construction needs to achieve stiffness and integrity at rest and under load.

There is advantage in motors of the present invention in maximising torque generated by antagonistic magnetomotive force between stator and rotor by minimising air gaps between stator and rotor consistent with stiffness of said rotor stages and stack tolerances of pertinent components. With minimised stator to rotor air gap there is potential for significant axial load between the rotor stage and motor stator at rest and during operation and it is preferable for the rotor to be stiff so as to resist bending which might otherwise interfere with the stator. Specifically, the magnetic load is greatest when the motor is off, the stator repulses the rotors hence the load drops on the rotor magnets when the motor is on and this further decreases as the speed increases.

A problem to be solved by the present invention is to achieve sufficient stiffness of the rotor stage so as to minimise movement towards said stator, whilst minimising the rotor stage mass, minimising eddy currents and maximising magnetic flux carrying capacity. Another problem for motors of the present invention is to maintain integrity of rotor stages that in the course of normal operation are caused to rotate at high rotational speed, which speed induces large centripetal forces on magnets and so stresses attachment between surface mounted magnets and said annular ring to which they are fixed.

Another problem to be solved by the present invention is that whereas symmetric machines, e.g., double stator single rotor axial flux and radial flux machine, rotors are usually mass balanced around a rotating axis, in contrast, for a double rotor single stator axial flux topology, the rotors are usually mass asymmetric along their rotation axis. Such axial mass asymmetry leads to bending moments caused by magnets being offset from the rotor's centre of mass and as speed increases rotors will concave or convex dish away from the stator providing a route for magnets to peel away from their mounting surface. The direction of dishing depends on the position of the centre of mass of the rotor.

Axial flux motors initially developed for automotive, instead of aerospace, applications are typically designed with cost and scalability of manufacture in mind and the problem of rotor mass has been overridden by the benefits of reliable mass production. However, rotor mass plays a significant role in the dynamic movement of the rotor over its operating range and a further problem to be solved for motors of the present invention is improved control of the axial movement of the rotor leading to improved motor performance and efficiency.

A further problem to be solved for motors of the present invention is rotors can have resonance frequencies coinciding with commonly used speeds of operation and there is value in tuning resonance whilst maintaining other characteristics.

Another problem to be solved for motors of the present invention is maintaining the temperature of permanent rare-earth transition-metal magnets commonly used to 130°C or thereabouts, that is to say at a peak temperature well below their curie temperature. Eddy currents generate heat in permanent magnets during a motor's operation and magnets may be laminated to reduce eddy currents, however, making laminations results in a loss of total useful magnetic material present and is costly. The number of laminations are accordingly limited by a cost / benefit balance. Too many laminations reduces the packing factor of the magnets (i.e. the ratio of magnet mass to insulation/adhesive mass). As a result, eddy currents though reduced, still generate heat in permanent magnets.

It is an object of the invention to provide a rotor in which at least some of the disadvantages associated with known rotor designs are overcome or are of reduced effect.

GB2468018 proposes an electric machine comprising a permanent magnet rotor and a stator having coils wound on stator bars.

US2009072639 proposes a composite rotor for an axial air-gap, permanent magnet dynamoelectric machine.

### Summary

In general terms, the present disclosure addresses the above problems and disadvantages by providing a composite rotor body. That is, a rotor body comprising fibre reinforced composite materials, for example a sheet moulded composite. The composite rotor body of the present disclosure results in a number of synergistic effects as it facilitates the provision of multiple layers of safety redundancy without sacrificing strength, stiffness, rotor integrity or reliability.

As described above, axial flux machines initially developed for automotive, instead of aerospace, applications are typically designed with cost and scalability of manufacture in mind, rather than the factors of reducing mass and providing multiple levels of safety redundancy (after all, if an automotive axial flux machine rotor fails, the vehicle using the axial flux machine will simply stop moving, whereas if an aerospace axial flux machine rotor fails, there is a risk of catastrophic failure as the aircraft using the axial flux machine will likely crash to the ground and be destroyed).

As a result of these differences, rotor parts, in particular the rotor body, in the automotive space are traditionally formed primarily of a metal. In contrast, the rotor body of the present disclosure is formed of a fibre reinforced composite material. This reduces the mass of the rotor body compared to metal rotor bodies typically used in the automotive industry.

Because the rotor body is SMC i.e., a non-metallic / non-magnetic composite that replaces the usual metal back iron of magnetic steel, a synergistic effect arises in that it is possible to replace typical north-south magnet array used in known axial flux machines with a more magnetically efficient Halbach array. A Halbach magnet array provides alternating north and south poles in a clockwise format, each 'working' pole, i.e., magnetic pole with corresponding stator armature, facing substantially in an axial direction and each opposing pole i.e., magnet poles facing substantially away from the stator (not shown) being turned by way of the Halbach array format towards the neighbouring pole face. This use of Halbach arrays removes the need for a magnetic return path i.e., that is usually provided by a steel or other metal back iron. Whilst more magnetic material is required to complete a Halbach array (there being no segmented magnets separated by free space but instead a continuous ring of magnets arranged to deflect 'un-opposed' poles towards neighbouring magnets), the substantial light-weighting and magnetic efficiency gains the synergistic use of an SMC rotor body and Halbach array provide makes the slight increase in mass from more magnetic material a worthwhile trade off. Specifically, the increase in magnet mass is less than the reduction in rotor mass through not requiring a metal back iron return path.

Finally, as the rotor body is composite rather than metal, the problem that automotive rotors made of metal face of undesirable eddy currents in the rotor body causing overheating and other undesirable effects during operation of the axial flux machine is entirely eliminated. Specifically, the inventors have found that a rotor mass reduction of >50% is possible, together with a reduction in eddy current loses of 85%.

Thus, according to aspects of the present disclosure, there is provided a rotor for an axial flux machine, the rotor comprising: a disc-shaped rotor body having an axis of rotation, the disc-shaped rotor body formed of a fibre reinforced composite material and having an opening at the axis of rotation; a plurality of permanent magnets mounted to a first face of the rotor body circumferentially around the axis of rotation, the plurality of permanent magnets arranged in a Halbach array configuration.

Optionally, the rotor comprises: a first ring structure configured to support a surface of the plurality of magnets closest to the axis of rotation; and a second ring structure configured to compress a surface of the plurality of magnets furthest from the axis of rotation.

In addition to the light-weighting (i.e. reducing mass) that arises from using a composite rotor body, the rotor of the present disclosure is provided with two ring structures arranged respectively around the radially inside and outside surfaces of the rotor's magnets. The two ring structures work synergistically to reduce the risk of failure to a greater degree than the improvement that would have resulted from the sum of each ring structure being implemented in isolation from the other.

In general terms, the presence and multiple functions of the first ring structure (i.e. an "inner ring") and the second ring structure (i.e. an "outer ring") provides a number of substantial advantages over known systems and methods as is set out below.

The first ring structure is provided around an inside surface of the rotor's magnets to structurally support the magnets against radially inwards, compressive forces whereas the second ring structure is provided around the outer surface of the rotor's magnets to compress the magnets inwards against the support provided by the first ring structure in order to reduce the load on the bond which secures the magnets to the rotor body. Not only does this opposing, two-ring structure pre-stress the rotor's magnets but each ring acts at least partially as physical blocking barrier or shield in the event of a catastrophic failure where a rapid break apart of the rotor results in shrapnel that could damage or destroy other parts of the aerospace vehicle into which the rotor is incorporated.

In other words, not only is the rotor body of the present disclosure lighter than metal rotor bodies of the automotive sector, but it is also provided with additional layers of safety redundancy that are not provided in rotors of the automotive sector. These additional layers of safety specifically may be: (i) SMC is a multi-layered material (i.e. layers of composites) so any weaknesses, cracks and so on tend not to propagate as easily across layers compared to weaknesses and cracks spreading e.g. a solid, integral metal material, (ii) SMC is substantially lighter than metal so in the event of a failure, any debris of a rotor body as it breaks apart imparts less force on anything it would strike compared to metal debris, and (iii) the rings may act as a final shield against any such debris.

A further distinction over metal rotor bodies is that metal rotor bodies typically rely on the magnetic attraction of the permanent magnets to the metal rotor body to ensure the magnets do not detach from the rotor body. However, as the rotor body of the present disclosure is not metal, it is not possible to rely on this magnetic attraction as a safety redundancy. In order to overcome this issue, the plurality of magnets are secured to the rotor body in the following ways:
(i) adhesive bond between the magnets' radially inside faces and the first ring structure;
(ii) friction of the magnets' radially outside faces against the second ring structure (e.g. a pre-stressed carbon hoop retaining ring); and
(ii) adhesive bond to rotor body.

In this way, lack of magnetic attraction between the magnets and the (non-metal) rotor body of the present disclosure is overcome and replaced by at least three safety redundancy layers that prevent the magnets from detaching from the rotor body.

In addition, the inventors found that where the first ring structure is provided with corrugations initially intended to reduce eddy currents in the first ring structure, there was an unexpected gain in overall stiffness of the rotor body, which in turn reduces undesirable mechanical vibrations. Thus the first ring structure not only acts as a safety redundancy mechanism to ensure the magnets remain secured to the rotor body, but it also unexpectedly and synergistically results in an increased stiffness in the rotor body, when provided with corrugations.

Optionally, the first ring structure is formed of a metal. The metal may be a poorly electrically conducting and non-magnetic metal or alloy that provides mechanical and structural strength. For example, the metal or alloy may be or comprise titanium (which has an electrical conductivity of around 1.798×10⁶ S/m at 20°C) or a titanium alloy. Other example poorly conducting and non-magnetic metals and alloys are also envisaged and include any metals not in the group of include gold, silver, copper and aluminium, and/or alloys such as Aluminium 7475, magnesium alloys, lithium alloys, and/or austenitic nickel-chromium-based super-alloys such as Inconel^{™}.

Advantageously, whilst the rotor body is formed of a composite material for light-weighting and eddy current reduction, keeping the first ring structure as a metal such as titanium or a titanium alloy (or other poorly electrically conducting and non-magnetic metal or alloy that provides mechanical and structural strength) harnesses the mechanical strength of such metals and alloys to enhance the ability of the first ring structure to resist the compressive force applied by the second ring structure to the magnets of the rotor. Additionally, as will be described below, the first ring structure not only provides the functions set out above, but it also acts as a balancing mass that can be moved relative to the rotor body during calibration of the rotor to control the centre of mass of the rotor. As such, the inventors realised that keeping the first ring structure formed of metal which is heavier than the composite material of the rotor body, instead of forming it of composite, makes balancing far easier as the heavier metal requires very little repositioning during calibration to shift the centre of mass into a balanced state.

Optionally, the first ring structure is mounted to the first face in one of a plurality of positions relative to the first face, and is configured to be moveable to another of the plurality of positions to control a centre of mass of the rotor.

Advantageously, as described above, the position of the first ring structure relative to the rotor body can be used to tune the centre of mass of the rotor to ensure that it lies in line with the plane in which the magnets are bonded to the rotor. This configurable positioning of the centre-of-mass line (by moving it closer to or further from the first surface in a direction parallel to the axis of rotation) removes bending moments that otherwise occur at high rotational speeds in asymmetric mass axial flux rotors which can lead to loss of magnet adhesion on the rotor body, as well as rotor dishing away from the stator (an effect where the off-centre, centre of mass causes the rotor body to adopt a dish-like shape which causes stress concentrations that may result in the rotor body peeling away from the magnets where the dishing is greatest towards the outer radial edge of the rotor body). These undesirable bending moments are also more likely to result in the rotor and/or parts of the axial flux machine to which the rotor belongs such as the stator, housing, and other parts) mechanically resonating as a result of the imbalanced forces. An easily configurable centre of mass accordingly provides a substantial advantage over rotors which do not allow adjusting of the centre of mass, or which would require separate counterweights with no other purpose than to balance the centre of mass (such counterweights resulting in undesirable increased mass). Effectively, the first ring structure of the present disclosure has a dual purpose of providing structural support and strength while also acting as a way to adjust the centre of mass during calibration of the rotor. A further effect that the configurability of the centre of mass facilitates is that configuring the centre of mass to be slightly off-centre from the bonding line of the magnets to the rotor body but in the direction of where the stator will be. This results in dishing towards the stator which reduces the air gap and thus improves efficiency. The present disclosure accordingly facilitates the counter-intuitive use to the typically negative effect of dishing to improve efficiency. As the SMC rotor body material is light compared to the mass a metal rotor body would have, the first ring structure does not need to be adjusted very far at all, to start harnessing the efficiency gain from dishing towards the stator.

Optionally, the first ring structure is mounted to the first face in said one of a plurality of positions with one or more of: studs, spacers, nuts, and bolts.

Advantageously, studs, spacers, nuts, and bolts provide a convenient and cheap way to allow the position of the first ring structure to be controlled when calibrating the centre of mass.

Optionally, the first ring structure is joined to the surface of the plurality of magnets closest to the axis of rotation with an adhesive bond layer, the adhesive bond layer being configured to prevent direct contact between first ring structure and the plurality of magnets.

Advantageously, an adhesive layer secures the magnets to the first ring structure in a way that ensures the magnets do not directly contact the first ring structure. This is important when the first ring structure is metal as direct contact would undesirably disrupt the intended magnetic field path. It is envisaged that the adhesive bond layer is provided between the first ring structure and the plurality of magnets once the first ring structure is positioned following calibration of the centre of mass of the rotor. That is, both the magnets and the first ring structure have an extent in a direction parallel to the axis of rotation away from the first surface and an adhesive bond layer is applied between the first ring structure and the magnets along this extent. The adhesive bond layer may be, for example, an epoxy material.

Optionally, an extent of the first ring structure in a direction parallel to the axis of rotation is less than an extent of the magnets in said direction, thereby leaving a portion of the surface of the plurality of magnets uncovered by the first ring structure. Advantageously, the first ring structure leaves at least a portion of the surface of the magnets exposed in the radially inwards direction (i.e. towards the axis of rotation). If the (metal) first ring structure were to fully cover the surface of the magnets, the magnetic flux would leak into the (metal) of the first ring structure, leading to losses and other undesirable effects. It is envisaged that, for example, at least 30% of the radially inwards facing magnet surface remains uncovered by the first ring structure, but other amounts are also envisaged, for example between 30-80%. Keeping the height in the axial direction of the first ring structure lower than that of the magnets has two effects. Firstly, the closer the ring is to the stator, the greater the electromagnetic loss induced in it from the stator field. Thus, keeping the height in the axial direction low reduces this loss. Secondly, if the ring is ferrous then it acts as a "flux short circuit" from the front face of the magnet to the back face. Thus, keeping the height in the axial direction low minimises this effect.

Optionally, a surface of the first ring structure is provided with a plurality of corrugation structures.

Advantageously, corrugation structures, for example, peaks and valleys on an axially facing surface of the first ring structure provide the effect of reducing eddy current losses in the metal of the first ring structure. However, the inventors have found that these structures also have a surprisingly provide the benefit of increasing stiffness of the first ring structure, and, as it is secured to the rotor body, also the stiffness of the rotor body and thus of the rotor as a whole. This prevents undesirable dishing of the rotor when it is rotating at high speeds.

Optionally, the second ring structure is formed of a fibre reinforced composite material.

Advantageously, as described above, the second ring structure provides a compressive force acting radially inwards on the radially outer surface of the magnets in the direction of the first ring structure. As described above, a purpose of the second ring structure is to reduce the load on the bond by which the magnets are secured to the rotor body by counteracting the rotational forces which result in a load in a direction away from the axis of rotation when the rotor is rotating at high speeds. Accordingly, the second ring structure surrounds the magnets at compresses them radially inwards to counter those rotational forces. Unlike the first ring structure where metal provides a synergistic advantage as described above, the second ring structure may be light-weighted and formed of a fibre reinforced composite material.

Optionally, the second ring structure is a pre-stretched ring structure.

Advantageously, as the maximum operationally safe rotational speeds of the rotor (and thus the likely max forces the magnets will be subjected to) are known from the design rotor, the second ring structure can be pre-stretched during manufacture of the ring such that when it is applied to the magnets, the compression it applies to the magnets is equal to centripetal forces at peak operating speeds so that the forces during peak operating speeds are close to being exactly balanced and the risk of these forces causing the bond by which the magnets are secured to the rotor body to weaken is reduced, thereby providing a further layer of safety redundancy. Whilst this does result in a compressive load on the magnets during rest/non-operation of the rotor, this is countered by the first ring structure and by the bonding adhesive used to secure the magnets to the rotor body and by the bonding layer between the radially inside surface of the magnet and the first ring structure.

Optionally, the second ring structure comprises one or more raised or recessed portions on a surface thereof, for example the radially outer surface thereof.

The raised or recessed portions may comprise, for example, divots, detents, recesses, holes and other structures which may be machined into the surface. Holes and recesses are particularly advantageous as these are easy to machine, thus making the manufacturing of the second ring structure cheaper and quicker.

Advantageously, the raised or recessed portions generate turbulence in the air (or fluid if applicable) surrounding the rotor as it rotates during operation. This turbulence advantageously helps to cool the rotor body because it encourages the movement of hot air close to the rotor (e.g. around the outer circumference of the ring where heat may be generated in the magnets and metal inner ring through eddy currents) away from the rotor and towards the stator, which may be oil cooled and thus better at dissipating heat away from the rotor assembly than the rotor is. The hot air may be replaced with fresh cool air and thus helps to keep the rotor cool. As the linear speed of the outer circumference of the second ring structure (i.e. the speed at which the surface moves if in a reference frame of a straight line) may be around 20-30m/s, a great degree of turbulence may be generated by small recesses or raised portions, for example, having dimensions with an order of magnitude of millimetres or less, which is quick and easy to machine.

Optionally, the plurality of permanent magnets are mounted to the first face by an adhesive bond.

Advantageously, as described above, bonding the magnets to a face of the rotor body allows the compressive forces of the second ring structure to be accommodated for while the rotor is at rest as well as provide a general further safety redundancy to secure the magnets to the rotor body to minimise the risk of the magnets becoming loose during operation of the rotor. As described above, a purpose of the second ring structure is to reduce the load on this bond as the rotor rotates.

Optionally, the rotor body is formed of a sheet moulding compound (SMC). Sheet moulding compounds may be made with thermosetting resins such as unsaturated polyester, vinyl ester, phenolic, or a modified vinyl urethane and can have a variety of fillers including powders, fibres and flakes of a variety of materials including carbon, metal fibres, ceramic and glass and natural materials.

Advantages of a sheet moulding compound will be described in more detail below.

Optionally, the rotor body comprises one or more ribs on a second face of the rotor body.

Advantageously, the ribs provide the rotor body with structural strength.

Optionally, the rotor body defines a plurality of further openings, in addition to the opening through the axis of rotation. The further openings expose the axially facing surface of the plurality of magnets.

Advantageously, by exposing the axially facing surface of the plurality of magnets to e.g. the air (or fluid if applicable) surrounding the rotor body, it helps to cool the magnets more efficiently than had the rotor body not had such openings. This is particularly useful for SMC rotor bodies compared to metal rotor bodies because SMC is not as good at conducting heat as metal. Thus, the further openings synergise with the SMC to provide a lightweighted rotor body that can still easily allow heat to be transferred from the magnets to the air surrounding the rotor body.

According to a further aspect, there is provided a rotor assembly for an axial flux machine, the rotor assembly comprising: the rotor described above; and a support hub positioned in the opening. The rotor body and the first ring structure of the rotor are configured to be: (i) secured to the hub structure in one of a plurality of respective positions relative to the hub structure, and (ii) moveable to another of the plurality of positions to control a centre of mass of the rotor assembly.

Advantageously, a rotor assembly using the rotor described above provides all of the above advantages. In addition, a hub structure is provided onto which to mount the rotor. The hub structure allows the rotor to be coupled to other components of an axial flux machine, for example one or more stators and further rotors (e.g. setup in an I configuration or H configuration axial flux machine, or in configurations with stacks of rotors and stators arranged along the axis of rotation). Thus while the present disclosure describes only a single example configuration, the teachings are equally applicable to these other configurations.

Optionally, the rotor body and the first ring structure are mounted to the support hub in said one of a plurality of positions with one or more of: studs, spacers, nuts, and bolts.

Advantageously, as described above, mounting the rotor body and first ring structure to the support hub with one or more of studs, spacers, nuts, and bolts, allows the position of the first ring structure relative to the rotor body to be configurable to control the centre of mass of the rotor assembly during calibration.

Further significant advantages that derive from the use of the SMC rotor described herein in a rotor assembly in a way that its position is configurable relative to the hub include the following:
(i) When the SMC rotor body is assembled into a rotor assembly with a central support hub (e.g. made of titanium or other poorly electrically conducting and non-magnetic metal or alloy that provides mechanical and structural strength), the relative positions of the two of the three major rotor massive components of this assembly (the third being the Halbach array) are now very easily configurable to ensure the centre-of-mass line lies in a plane midway through the magnet bond-line. This easily configurable positioning of the centre-of-mass line facilitates the reduction and/or complete removal of any bending moments that otherwise occur at high rotational speeds in asymmetric mass axial flux rotors which can lead to dishing (the effect where the rotor body begins to deform into a dish shape which can cause the rotor body to "peel" away from the rotor body.
(ii) The use of titanium or other poorly electrically conducting and non-magnetic metal or alloy that provides mechanical and structural strength for the support hub which provides a low mass high strength structure enabling precision mounting features necessary for rotor position sensor(s) and motor-to-motor assembly consistency.

Optionally, the rotor assembly comprises a second rotor of the type described above that secured to an opposite side of the hub structure as the other rotor wherein the rotor body and the first ring structure of the second rotor are configured to be: (i) secured to the hub structure in one of a plurality of respective positions relative to the hub structure, and (ii) moveable to another of the plurality of positions to control a centre of mass of the rotor assembly.

As above, the second rotor has all of the advantages of the rotor described above, and thus a rotor assembly in the H-configuration is provided with an easily adjustable centre of mass that has multiple layers of safety redundancy and which is substantially lighter than known rotor assemblies from, for example, the automotive sector. The H-configuration assembly is provided as an illustrative example only and it is envisaged that an I-configuration and other configurations such as multiple stacks of rotors and stators arranged along the axis of rotation may also be used.

According to a further aspect, there is provided an axial flux machine comprising the rotor assembly described above and a stator arranged on the support hub adjacent the rotor of the rotor assembly.

Advantageously, an axial flux machine comprising the above rotor assembly provides all of the above described advantages. It is envisaged that, given the combination of light-weighting and multiple layers of safety redundancy, the axial flux machine is particularly suitable for (but not exclusively limited to) use in an aircraft or other flying vehicle such as a drone. It will be appreciated that axial flux machines with metal rotor bodies and no or few layers of safety redundancy are not suitable for use in aircraft or other flying vehicles.

According to a further aspect there is provided a method of manufacturing a rotor body of a rotor for an axial flux machine, the method comprising: providing a compression mould of a disc-shaped rotor body having an opening at a centre thereof; laying a plurality of sheets of fibre reinforced resin in the compression mould; and applying heat and pressure to the plurality of sheets in the compression mould to cause the resin and fibre-reinforcement of the resin to flow in the compression mould into said disc-shape of the rotor body.

Some advantages of the sheet moulding approach of this aspect are set out below.

As will be appreciated, fibre reinforced composite materials enable lightweight mechanically stiff structures. The strength to weight ratio of composite materials can be relatively high compared to steel and composite materials come with potential additional benefits including being classed as electrical insulators with high reluctance i.e., magnetic properties comparable with free space, and are usually non-magnetic which can improve efficiency of the machine. Composite materials also lend themselves to tuning of vibrational dampening.

Sheet moulding compounds (SMC) may be made with thermosetting resins such as unsaturated polyester, vinyl ester, phenolic, or a modified vinyl urethane and can have a variety of fillers including powders, fibres and flakes of a variety of materials including carbon, metal fibres, ceramic and glass and natural materials.

In a (non-limiting) example of the present disclosure, a composite material may be used comprising short, <1mm, carbon fibres whereby the SMC consists of chopped unidirectional carbon fibre held within an epoxy matrix. In this example, and unlike in known SMC methods, the SMC material has and retains its randomly orientated isotopically distributed short fibres in the x, y and z axes, and though these attributes can be adversely modified by compression moulding processes, the SMC structures of the present disclosure largely retain their random oriented 'three dimensional' strength characteristics, something which is not present in known SMC structures.

Specifically, in its 'raw' state, SMC is made up of pre-impregnated sheets which are cut to a specific shape. A stack of sheets is placed into a mould, and a compressive load applied whilst the mould temperature is controlled.

Control of the viscosity of the resin in this compressed and heated state is a factor that determines the mechanical strength of the finished component. As the material is compressed, and the material flows within the compression mould, the viscosity of the resin determines how or if fibres are dragged by resin flow. Resin and fibre flow controls the orientation of fibres within the cured component. Thus, in the present disclosure, one aspect of the method is that fibres are oriented in a controlled fashion. To do this, the design of the rotor structure and compression mould has been optimised so that fibres align to maximise stiffness i.e., flexural modulus which typically means minimising radial flow in any ribs of the rotor body. Controlling fibre orientation through controlled resin flow in specific regions provides the body rotor ribs with orthotropic strength properties enabling smaller ribs and reducing overall thickness and crucially mass of the rotor structure.

Optionally, said applying heat and pressure comprises: pre-heating the plurality of sheets to between 140-160°C (preferably 150°C); applying a pressure of between 8-12 MPa (preferably 10 MPa) for between 7-9 minutes (preferably 8 minutes) during which the plurality of sheets are further heated to a temperature of between 170-190°C (preferably 180°C) and held at said temperature for between 4-6 minutes (preferably 5 minutes) before being cooled to between 140-160°C (preferably 150°C).

Advantageously, the inventors have found that this set of parameters results in the desirable properties described above.

According to a further aspect of the present disclosure, there is provided a rotor body for a rotor of an axial flux machine, the rotor body having a disc-shape having an axis of rotation, the disc-shaped rotor body being formed of a fibre reinforced composite material and having an opening at the axis of rotation.

Advantageously, the rotor body provides the advantages described above.

### Brief Description of the Drawings

These and other aspects of the invention will now be further described, by way of example only, with reference to the accompanying figures in which:
Figure 1 illustrates an example known yokeless and segmented armature (YASA) machine.
Figure 2 illustrates an example known yokeless and segmented armature (YASA) machine.
Figure 3 illustratively shows a view of a rotor body according to the present disclosure.
Figure 4a illustratively shows a view of a rotor according to the present disclosure.
Figure 4b illustratively shows a view of a portion of the rotor of Figure 4a.
Figure 4c illustratively shows a view of a portion of the rotor of Figure 4a.
Figure 4d illustratively shows a view of a portion of the rotor of Figure 4a.
Figure 4e illustratively shows a view of a portion of the rotor of Figure 4a.
Figure 5 illustratively shows a view of a rotor assembly according to the present disclosure.
Figure 6 illustratively shows a view of an axial flux machine according to the present disclosure.
Figure 7 illustratively shows a flowchart of a method according to the present disclosure.

### Detailed Description

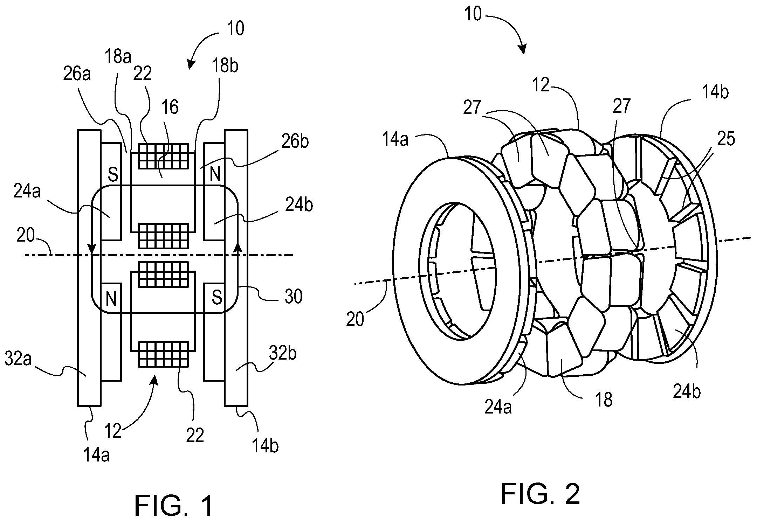

Figures 1 and 2 are taken from WO2012/022974, and show details of an example known yokeless and segmented armature (YASA) machine 10. The machine 10 may function either as a motor or as a generator.

The machine 10 comprises a stator 12 and, in this example, two rotors 14a,b. The stator 12 comprises a collection of separate stator bars 16 spaced circumferentially about a machine axis 20, which also defines an axis of the rotors 14a,b. Each bar 16 carries a stator coil 22, and has an axis which is typically disposed parallel to the rotation axis 20. Each end 18a,b of the stator bar is provided with a shoe 27, which helps to confine coils of the stator coil 22 and may also spread the magnetic field generated by the stator coil. The stator coil 22 may be formed from square or rectangular section insulated wire so that a high fill factor can be achieved. In a motor the stator coils 22 are connected to an electrical circuit (not shown) that energizes the coils so that poles of the magnetic fields generated by currents flowing in the stator coils are opposite in adjacent stator coils 22.

The two rotors 14a,b carry permanent magnets 24a,b that face one another with the stator coil 22 between. When the stator bars are inclined (not as shown) the magnets are likewise inclined. Gaps 26a,b are present between respective shoe and magnet pairs 17/24a, 27/24b. In an example motor the stator coils 22 are energized so that their polarity alternates to cause coils at different times to align with different magnet pairs, resulting in torque being applied between the rotor and the stator. In Figures 1 and 2 the structural strength of the stator housing is achieved by providing a suitably thick layer of polymer, for example greater than 10mm and bolting the polymer to an outer housing.

The rotors 14a,b are generally connected together, for example by a shaft (not shown), and rotate together about the machine axis 20 relative to the stator 12. In the illustrated example a magnetic circuit 30 is formed by two adjacent stator bars 16, two magnet pairs 24a,b, and two back plates 32a,b, one for each rotor, linking the flux between the backs of each magnet pair 24a,b facing away from the respective coils 22. The back plates 32a,b of WO2012/022974 in may be referred to as rotor bodies or back irons and, in the known examples of Figures 1 and 2 comprise a metal, magnetic material, typically a ferromagnetic material, which has a high mass and is thus not suitable for aerospace use. The stator coils 16 are enclosed within a housing which defines a chamber for the rotors and stator, and which may be supplied with a cooling medium.

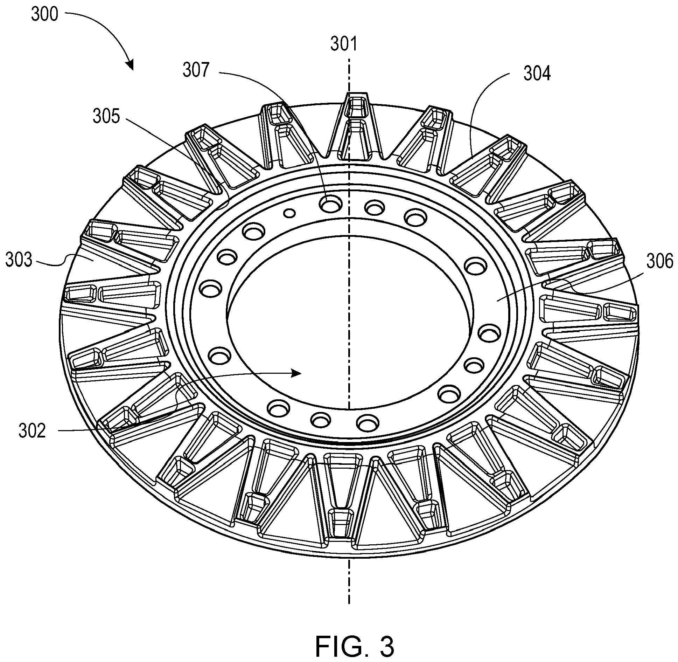

Figure 3 illustratively shows a rotor body 300 according to the present disclosure. The rotor body 300 comprises a disc formed of a fibre reinforced composite material with opening 302 at the axis of rotation 301 of the disc. The term axis of rotation means the axis about which the rotor would rotate when used in an axial flux machine. It is envisaged that the fibre reinforced composite material is a sheet moulded composite (SMC) material, as described above. The rotor body 300 has two faces: a first face (not visible in Figure 3) onto which a plurality of permanent magnets are intended to be mounted, and a second face 303 on an opposite side of the rotor body 300 to the first face.

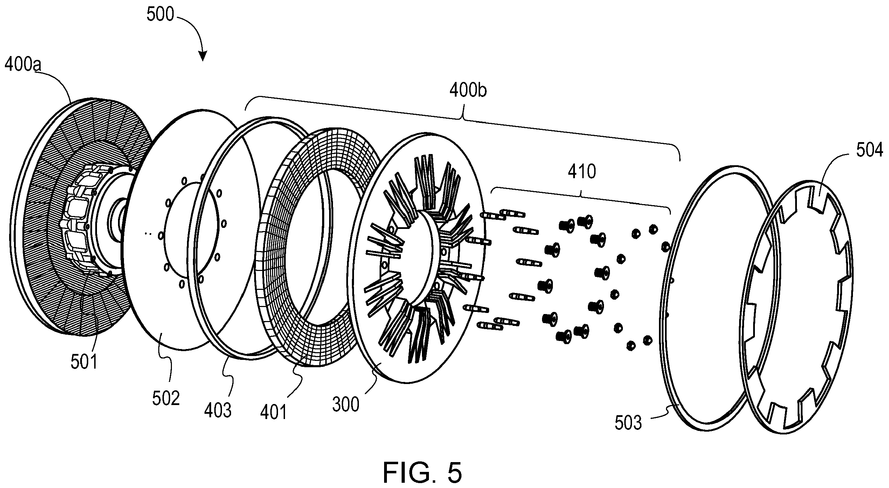

A plurality of support ribs 304 are provided on the second face 303 The support ribs 304 extend in a direction generally towards the axis of rotation across a portion. This need not be exactly to the axis but may be in the general direction thereof. However, it is envisaged that the ribs 304 may in other examples point exactly at the axis of rotations. The ribs may extend entirely, or partially across the face of the rotor body 300 and may start at the radially outer edge or at distance therefrom and may end at or beyond a radially inside edge of the face, or a distance therefrom. In the example of Figure 3, the support ribs 304 "zig-zag" across the second face 303, extending radially inwards to a first radius which is not at the radially inside edge of the rotor body 300. The radially inwards extent of the support ribs 304 in this example is approximately up to halfway towards the radially inside edge of the rotor body 300. An exemplary alternative rib configuration is shown in Figure 5 and other configurations are also envisaged. The plurality of support ribs 304 have the further effect of generating turbulence in the surrounding air (or if applicable fluid) as the rotor body rotates during operation. This turbulence advantageously helps to cool the rotor body as it encourages the movement hot air close to the rotor body (where heat may be generated in the magnets and metal inner ring through eddy currents) away from the rotor and towards the stator, which may be oil cooled and thus better at dissipating heat away from the rotor assembly than the rotor is. The hot air may be replaced with fresh cool air and thus helps to keep the rotor cool.

A raised ring support structure 305 is also provided on the second face, joined to the support ribs 304. Radially inside of the raised ring support structure 305 at least a portion of the second face 303 may comprise a recessed portion 306.

The second face 303 is also provided with a plurality of bolt holes 307 configured to receive bolts and used to secure a support hub of a rotor assembly to the rotor body 300, and/or to secure other components to the rotor body 300 such as a ring structure as will be described in more detail below.

The rotor body 300 may be manufactured according to the methods described later herein.

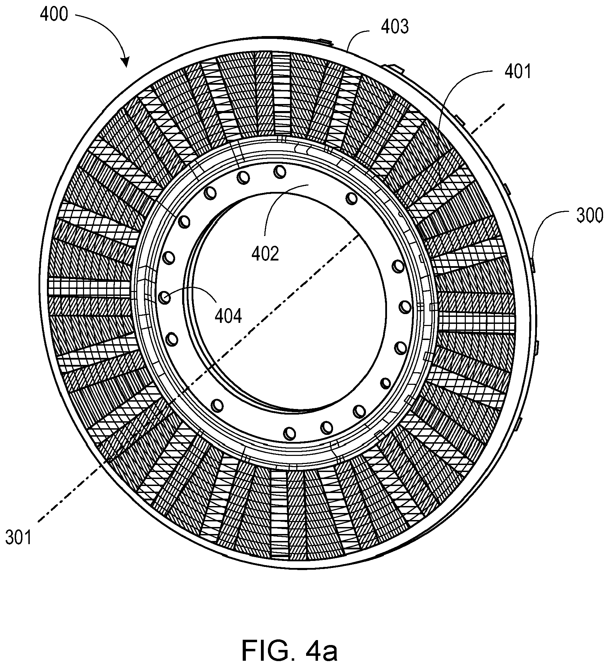

Figure 4a illustratively shows a view of rotor 400 according to the present disclosure for an axial flux machine. The rotor comprises the rotor body 300 of Figure 3 and a plurality of permanent magnets 401 mounted to the first face of the rotor body 300 with an adhesive bond. The plurality of magnets 401 are arranged in a Halbach array configuration.

Specifically, because the rotor body is SMC i.e., a non-metallic / non-magnetic composite that replaces the usual metal back iron of magnetic steel, a synergistic effect arises in that it is possible to replace typical north-south magnet array used in known axial flux machines with a more magnetically efficient Halbach array. A Halbach magnet array provides alternating north and south poles in a clockwise format, each 'working' pole, i.e., magnetic pole with corresponding stator armature, facing substantially in an axial direction and each opposing pole i.e., magnet poles facing substantially away from the stator (not shown) being turned by way of the Halbach array format towards the neighbouring pole face. This use of Halbach arrays removes the need for a magnetic return path i.e., that is usually provided by a steel or other metal back iron. Whilst more magnetic material is required to complete a Halbach array (there being no segmented magnets separated by free space but instead a continuous ring of magnets arranged to deflect 'un-opposed' poles towards neighbouring magnets), the substantial light-weighting and magnetic efficiency gains the synergistic use of an SMC rotor body and Halbach array provide makes the slight increase in mass from more magnetic material a worthwhile trade off. Specifically, the increase in magnet mass is less than the reduction in rotor mass through not requiring a metal back iron return path.

The rotor 400 further comprises two ring structures 402, 403. The first ring structure 402 is configured to support a radially inwards facing surface of the plurality of magnets 401, that is, the surface of the plurality of magnets 401 closest to the axis of rotation 301. The second ring structure 403 is configured to compress a radially outer surface of the plurality of magnets, that is, the surface of the plurality of magnets 401 furthest from the axis of rotation 301.

The first ring structure 402 is formed of a metal, for example titanium or a titanium alloy, or other poorly electrically conducting and non-magnetic metal or alloy that provides mechanical and structural strength, and is mounted to the first face of the rotor body 300 in one of a plurality of positions relative to the first face. Specifically, the exact position of the first ring structure 402 relative to the rotor body 300 in the direction of the axis of rotation 301 may be adjusted when the rotor is being calibrated so that the centre of mass of the rotor can be controlled. For example, the first ring structure may be secured to the rotor body 300 using one or more nuts and bolts and the relative position changed be including spacers between the rotor body 300 and the first ring structure 402. The first ring structure 402 is accordingly provided with one or more openings through which bolts or other securing means may be inserted. These openings 404 match the position of the corresponding openings 307 on the rotor body 300.

In contrast, the second ring structure 403 is formed of a fibre reinforced composite material, for example a carbon fibre composite material. The second ring structure 403 is pre-stretched so that when it is mounted around the magnets 401, the compression it applies to the magnets 401 is approximately equal to centripetal forces of the rotor rotating at peak operating speeds. As a result, the outwardly directed forces during peak operating speeds are close to being exactly balanced by the inwards forces applied by the second ring structure 403 so the risk of these forces causing the bond by which the magnets 401 are secured to the rotor body 300 to weaken is reduced, thereby providing a further layer of safety redundancy. Whilst this does result in a compressive load on the magnets 401 during rest/non-operation of the rotor, this is countered by the first ring structure 402 and by the bonding adhesive used to secure the magnets 401 to the rotor body 300 and by the bonding layer between the radially inside surface of the magnet and the first ring structure 402.

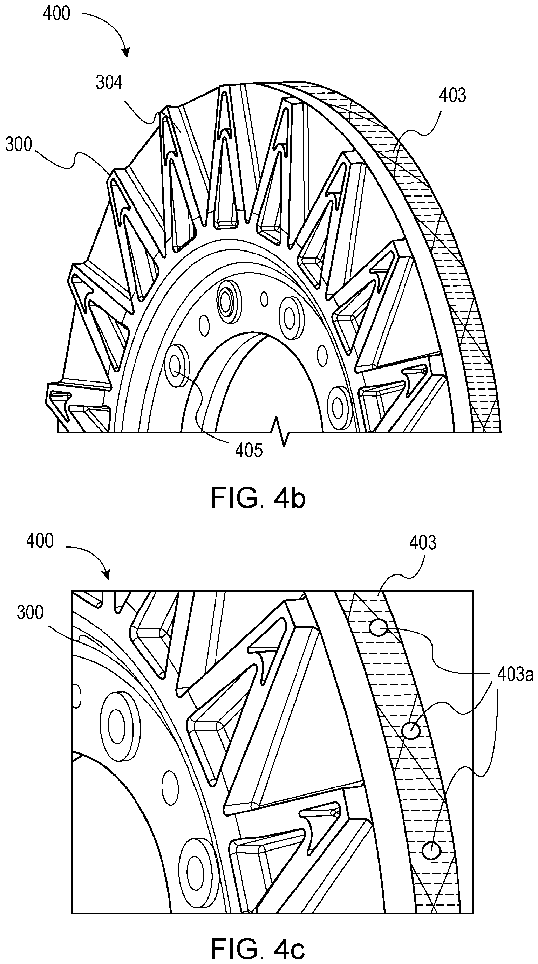

Figure 4b illustratively shows an alternative view of a portion of the rotor 400 of Figure 4a, specifically showing the opposite side thereof. In Figure 4b, the ribs 304 of the rotor body are visible, as well as a radially outside surface of the second ring structure 403, and the nuts and bolts used to secure the first ring structure 402 to the rotor body 300.

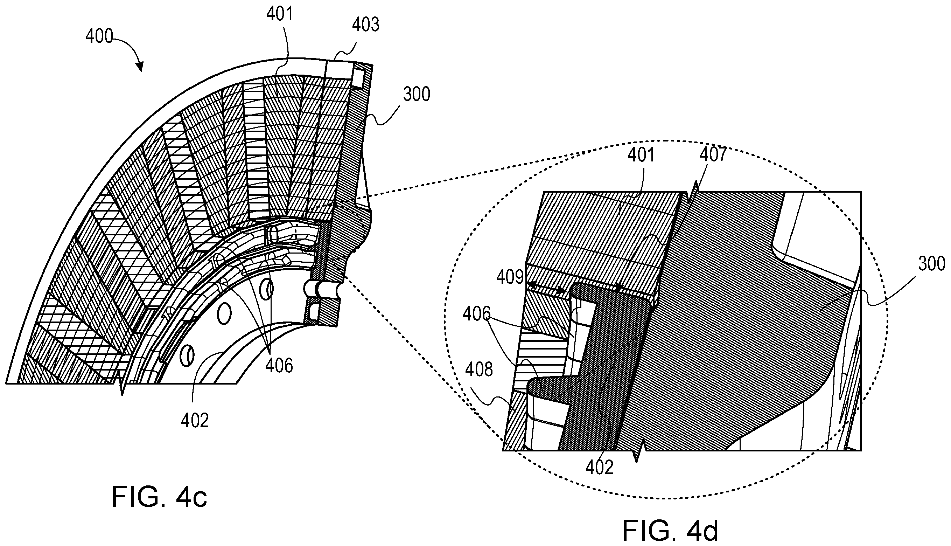

Figure 4c illustratively shows a zoomed in view of the rotor 400 of Figure 4a, specifically showing a radially outer surface of a portion of the circumference of the second ring structure 403. The surface comprises a plurality of recessed portions 403a that may extend partially or fully through the second ring structure 403, in which case they are holes through the second ring structure 403. As the rotor rotates during operation, the outer circumference of the second ring structure 403 typically has a linear speed of around 20-30m/s which means even small disruptions in the exposed surfaces of the second ring structure 403 may result in a substantial amount of turbulence being generated in the surrounding air. This turbulence advantageously encourages air movement around the space in which the rotor 400 is housed and thus encourages air that has been heated by the operating rotor 400 to be replaced by cooler air from elsewhere in the space around the rotor 400, thereby helping to keep the rotor cooler than had there been no turbulent airflow. Recessed portions e.g. dips or holes are relatively easy to machine into the second ring structure 403 so this facilitates an efficient and easy manufacturing process. Whilst not shown in Figure 4c, it is envisaged that raised portions may additionally or alternatively be provided. The recessed and/or raised portions may have any shape, for example, circular, square, diamond, serpentine (i.e. `S') shapes and others, and they may extend for a portion around the surface to further enhance their effectiveness at generating turbulence in the surrounding air.

Figure 4d illustratively shows a slice through view of a portion of the rotor 400 of Figure 4a. Visible in Figure 4d is that the first ring structure 402 is provided with corrugations 406. As described above, these are primarily intended to reduce undesirable eddy currents in the first ring structure 406 but unexpectedly result in an increased stiffness in the rotor body 300 and thus an overall increased stiffness of the whole rotor 400. The corrugations comprise alternative raised and recessed portions in a surface of the first ring structure 402.

Figure 4e illustratively shows a zoomed in portion of the view of Figure 4d where the rotor body 300, magnets 401, first ring structure 402 with corrugations 406 are visible. In addition Figure 4e shows that the first ring structure 402 does not directly contact or touch the surface of the magnets 401. This ensures that the magnets are not directly in contact with the metal of the first ring structure 402 which would disrupt the path of the field lines of the Halbach array. Instead, a gap 407 is provided between the first ring structure 402 and the magnets 401 which is filled with an adhesive bond layer. Thus, the first ring structure 402 supports the magnets indirectly through the adhesive bond layer.

Further, it can be seen in Figure 4e that the first ring structure 402 does not fully cover the radially inwards facing surface 408 of the magnets 401. Instead, a portion 409 (for example around 50%) of the surface 408 of the magnets remains exposed. The primary purpose of this is to ensure the metal of the first ring structure does not interfere with the field lines of the Halbach array which would result in inefficiencies during operation of the rotor 400.

Figure 5 illustrative shows an exploded view of an exemplary rotor assembly 500 according to the present disclosure. The rotor assembly comprises two rotors 400a, 400b, for example of the type shown in Figures 4a-4e. One rotor 400a is shown in an assembled state, the other rotor 400b is shown in an exploded state and illustrates the rotor body 300 (with a different rib configuration to that shown in Figure 3), the plurality of magnets 401 arranged in a Halbach configuration, the second ring structure 403, and a set 410 of studs, k-nuts and inserts (e.g. compression limiters) as an alternative to nuts and bolts. It is envisaged that nuts and bolts may instead or additionally be used. Applying a bolt load directly to the SMC rotor body may result in creep over time due to the high load applied. The compression limiters accordingly limit the amount of the load that the SMC experiences to avoid risk of damage to the rotor body.

The rotor assembly 500 further comprises a support hub 501, in this case titanium but it may also be any other poorly electrically conducting and non-magnetic metal or alloy that provides mechanical and structural strength, positioned in the opening of the assembled rotor 400a. Whilst visible in Figure 5, the first ring structure and rotor body of the assembled rotor 400a is secured to the support hub, for example through bolt holes or other openings on the support hub 501.

Figure 5 also illustrates an optional retention layer 502, balancing ring 503 and castellated rotations per second target 504.

The retention layer 502, if provided, may be applied and bonded to the outer face of the Halbach array to reduce the risk that any magnet of the array detaches in an axial direction. The retention layer 502 also helps to radiate heat generated through eddy current losses in magnets, back towards an oil cooled stator when the rotor assembly is installed in an axial flux machine. However, the retention layer is not strictly required as the complete magnetic loop of the Halbach magnet array combined with the compression of the second ring structure results in the magnets being secure enough within the array such it would require a significant amount of force (substantially more than the array would ever be subject to in operation) to push a single magnet wedge out of the array.

The balancing ring 503, if provided, further helps to position the centre of mass of the rotor assembly during calibration (although is not strictly required given that the rotor of the present disclosure is able to achieve centre of mass calibration on its own by adjustment of the first ring structure relative to the rotor body). The balancing ring 503 may accordingly adjust rotor balance to prevent out-of-balance vibration when rotating at high speeds. Alternatively, the balancing ring 503 may be replaced with resin filler when the rotor assembly is built into an axial flux machine. Specifically, the undesirable vibrations may be adjusted by the mass balancing resin, however rotor and wider machine resonances may lead to excessive and perhaps destructive vibrations, particularly if the machine's normal operating point lies close to a resonant driving frequency. Usually, effort is given in design stages to avoid resonant modes sitting at normal operating points for the machine, particularly the natural or 1^{st} resonance mode. Often there are several resonances of higher modes that may be excited, and it is difficult to design around them all, and in this case such troublesome resonance modes are shifted to operating points away from normal running, but which nevertheless may be traversed during operation. The task then is to traverse resonant nodes quickly so as not excite excessive / troublesome vibrations.

Because of materials usually used in building axial flux machines, there is little room to manipulate resonant frequency nodes. In the case of an SMC rotor however there are greater degrees of freedom, e.g., modify rib structures, adjust fibre and filler content and its distribution through design of layer materials which can be used to shift rotor disc mass and hence vibration modes. Thus the rotor assembly of the present disclosure is more configurable than rotor known rotor assemblies.

The rotations per second target (RPS target) 504 is provides a castellated structure that rotates, passing a sensor which determines how fast the rotor is rotating. The RPS target 504 is attached to second face of the rotor body 300, for example to an area without ribs i.e. clean back face. Such sensors are widely used for rotor position sensing and typically produce a sinusoidal (or binary) output after some noise filtering. Such sensors provide motor controllers with rotor position information for motor control.

The rotor assembly 500 of Figure 5 is set up for an H-configuration axial flux machine, however it is envisaged that a similar assembly with only a single rotor may used where the rotor assembly 500 is intended for use with an I-configuration axial flux machine.

Other configurations with other numbers of rotors and stators (for example arranged in a stack) are also envisaged.

Whilst not shown in Figures 4a-4e or Figure 5, it is envisaged that the rotor body 300 may define one or more further openings therethrough which are provided in addition to the central, axial opening through the axis of rotation of the rotor body 300. The purpose of such further openings is two-fold. Firstly, they further lightweight the rotor body 300. Secondly, and particularly advantageously, they expose the magnets to the surrounding air to help cool them. The inventors have found that this cooling effect is especially effective where the rotor body is SMC, as in the present case. This is because rotor bodies are traditionally metal, which are thermally highly conductive and are accordingly very good at providing a thermal pathway to draw excess heat away from the magnets. In contrast, SMC is not a good thermal conductor and the inventors found that this can in some cases result in undesirable heat build-up in the magnets. Providing openings in the rotor body 300 solves this problem as it partially exposes magnet surfaces to airflow where they would have been exposed in traditional rotors. This airflow helps to cool the magnets. The further openings may optionally be shaped so as to draw air into the openings as the rotor rotates, for example shaped with angled walls through the rotor body, for example angled towards the direction of rotation of the rotor so that the angled wall surfaces draw air into the opening as they rotate. It is envisaged that the further openings may be provided between the ribs 304 of the rotor body 300.

Further, the ribs 304 on the surface of the rotor body 300 not only serve to provide structural strength, but may also generate turbulence to encourage airflow into the further openings. Indeed, the ribs 304 may optionally be shaped, e.g. with one or more angled surfaces, to draw air towards the further openings as the rotor rotates to further assist in providing a cooling effect.

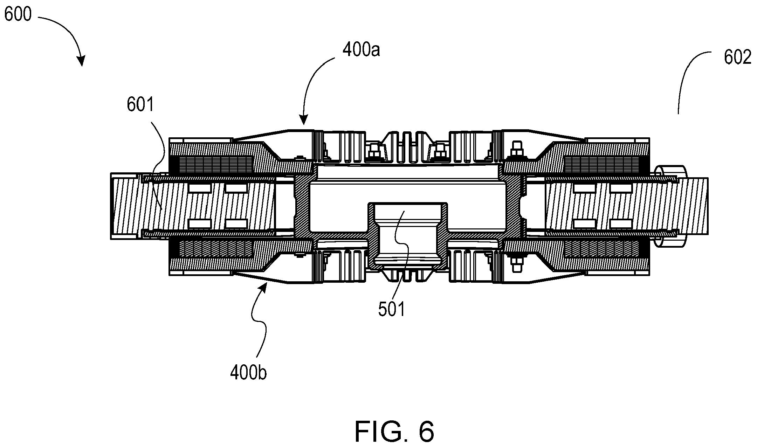

Figure 6 illustratively shows a cross-sectional view of an axial flux machine 600 according to the present disclosure. The axial flux machine 600 comprises a rotor assembly of the type shown in Figure 5, which accordingly comprises two rotors 400a, 400b of the type shown in Figures 4a-4e, and a stator 601, as well as a support hub 501. The axial flux machine 600 is set up in the H-configuration, that is, the two rotors 400a, 400b are positioned on either side of the stator 601. An I-configuration axial flux machine is also envisaged, as well as other configurations comprising stacks of rotors and stators arranged along an axis of rotation.

The rotors 400a, 400b, stator 601 and support hub 501 are enclosed within a housing 602 which may be provided with an opening (not shown) or other mechanism to transfer rotation of the rotors along a power train into rotation of a propeller or other movement mechanism of an aircraft or other flying vehicle.

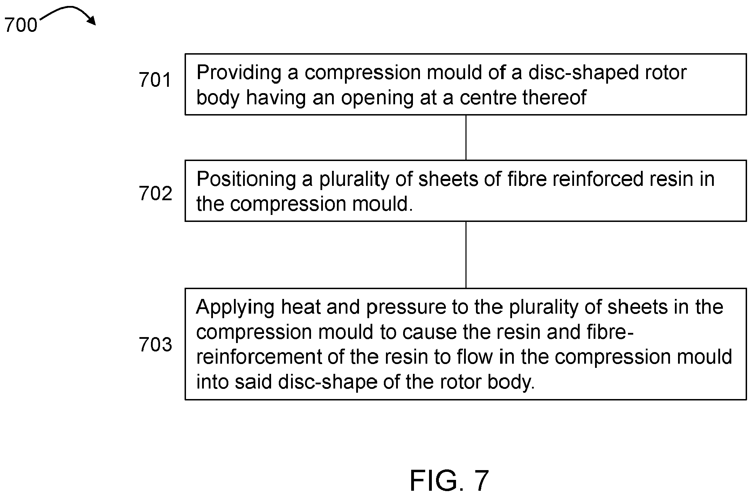

Figure 7 illustrates a flowchart of a method 700 according to the present disclosure of manufacturing a rotor body of a rotor for an axial flux machine, the method comprising: providing 701 a compression mould of a disc-shaped rotor body having an opening at a centre thereof; positioning 702 a plurality of sheets of fibre reinforced resin in the compression mould; and applying 703 heat and pressure to the plurality of sheets in the compression mould to cause the resin and fibre-reinforcement of the resin to flow in the compression mould into said disc-shape of the rotor body.

In this illustrative example, die cutting tool produces 23 pieces of SMC of 1.2mm thickness and 200mm diameter. The SMC pieces are loaded by hand into a compression mould tool pre-heated to 150°C and the mould clamp closed applying a pressure of 10MPa for 8 minutes during which the temperature is ramped to 180°C and held for 5 minutes before being cooled to 150°C prior to ejection of the part. As described below, it is envisaged that the hand-performed step of loading may alternatively be performed in an automated manner on a production line.

Long term stability of parts is assisted by die cutting sheet layer size, so there is no flashing to be trimmed, and all fibre ends are encased in mould resin.

Many composite materials require manual lay-up of fibre layers which can be time consuming and expensive. The mouldability of SMC provides an optional benefit of being suited to manual and robotic handling for automated manufacture. In the targeted application, high volume manufacturing of rotors is anticipated meaning the production method of the rotor needs to be highly automated. An illustrative example of this may comprise a bank of mould dies is preheated to 150°C and stacked layers of SMC are robotically placed in each mould prior to mould closing with an applied pressure of 10MPa for 8 minutess during which the temperature is ramped to 180°C and held for 5 minutes before being cooled to 150°C prior to ejection of parts, which are removed through an automation process.

Testing of SMC components for verification of properties and life resilience may be performed by Highly Accelerated Life Testing (HALT) and similarly by Highly Accelerated Stress Screening (HASS), as will be appreciated by the skilled person.

HALT enables mould processing parameters to be rapidly optimised whilst HASS enables verification of production consistency.

The terms upper and lower, radial, axial, and the horizontal and vertical directions as used herein are used to describe the relative positioning of said surfaces and directions relative to each other and are not intended to limit the present disclosure to any given orientation in a coordinate system. The terms upper and lower, and horizontal and vertical are used for convenience of illustration relative to the figures provided herein. Thus, the upper surface is on an opposite side of a feature to the lower surface. Similarly, the inner surface is on an opposite of a feature to the outer surface regardless of the orientation of the feature in the coordinate system.

No doubt many other effective alternatives will occur to the skilled person. It will be understood that the invention is not limited to the described embodiments and encompasses modifications apparent to those skilled in the art lying within the scope of the claims appended hereto.

## Claims

1. A rotor for an axial flux machine, the rotor comprising:
a disc-shaped rotor body having an axis of rotation, the disc-shaped rotor body formed of a fibre reinforced composite material and having an opening at the axis of rotation;
a plurality of permanent magnets mounted to a first face of the rotor body circumferentially around the axis of rotation, the plurality of permanent magnets arranged in a Halbach array configuration.

2. The rotor of claim 1, comprising:
a first ring structure configured to support a surface of the plurality of magnets closest to the axis of rotation; and
a second ring structure configured to compress a surface of the plurality of magnets furthest from the axis of rotation.

3. The rotor of claim 2, wherein the first ring structure is formed of a metal, optionally
wherein the metal comprises a poorly electrically conducting and non-magnetic metal or alloy, optionally
wherein the metal is titanium or a titanium alloy.

4. The rotor of claim 2 or 3, wherein the first ring structure is mounted to the first face in one of a plurality of positions relative to the first face, and is configured to be moveable to another of the plurality of positions to control a centre of mass of the rotor, and/or
wherein the first ring structure is mounted to the first face in said one of a plurality of positions with one or more of: studs, spacers, nuts, and bolts.

5. The rotor of any of claims 2 to 4, wherein the first ring structure is joined to the surface of the plurality of magnets closest to the axis of rotation with an adhesive bond layer, the adhesive bond layer being configured to prevent direct contact between first ring structure and the plurality of magnets, and/or
wherein an extent of the first ring structure in a direction parallel to the axis of rotation is less than an extent of the magnets in said direction, thereby leaving a portion of the surface of the plurality of magnets uncovered by the first ring structure, and/or wherein a surface of the first ring structure is provided with a plurality of corrugation structures.

6. The rotor of any of claims 2 to 5, wherein the second ring structure is formed of
a fibre reinforced composite material; and/or
wherein the second ring structure is a pre-stretched ring structure; and/or
wherein the second ring structure comprises one or more raised or recessed portions on a surface thereof.

7. The rotor of any preceding claim, wherein the plurality of permanent magnets are mounted to the first face by an adhesive bond.

8. The rotor of any preceding claim, wherein the rotor body is formed of a sheet moulding compound; and/or
wherein the rotor body comprises one or more ribs on a second face of the rotor body; and/or
wherein the rotor body defines a plurality of further openings therethrough to expose an axially facing surface of the plurality of magnets.

9. A rotor assembly for an axial flux machine, the rotor assembly comprising:
the rotor of any preceding claim; and
a support hub positioned in the opening,
wherein the rotor body and the first ring structure of the rotor are configured to be: (i) secured to the hub structure in one of a plurality of respective positions relative to the hub structure, and (ii) moveable to another of the plurality of positions to control a centre of mass of the rotor assembly.

10. The rotor assembly of claim 9, wherein the rotor body and the first ring structure are mounted to the support hub in said one of a plurality of positions with one or more of: studs, spacers, nuts, and bolts.

11. The rotor assembly of claim 9 or 10, comprising a second rotor of any of claims 2-17 secured to an opposite side of the hub structure as the other rotor wherein the rotor body and the first ring structure of the second rotor are configured to be: (i) secured to the hub structure in one of a plurality of respective positions relative to the hub structure, and (ii) moveable to another of the plurality of positions to control a centre of mass of the rotor assembly.

12. An axial flux machine according to any preceding claim comprising:
the rotor assembly of any of claims 9-11, and
a stator arranged on the support hub adjacent the rotor of the rotor assembly.

13. A method of manufacturing a rotor body of a rotor for an axial flux machine, the method comprising:
providing a compression mould of a disc-shaped rotor body having an opening at a centre thereof;
positioning a plurality of sheets of fibre reinforced resin in the compression mould; and
applying heat and pressure to the plurality of sheets in the compression mould to cause the resin and fibre-reinforcement of the resin to flow in the compression mould into said disc-shape of the rotor body.

14. The method of claim 13, wherein said applying heat and pressure comprises:
pre-heating the plurality of sheets to between 140-160°C;
applying a pressure of between 8-12 MPa for between 7-9 minutes during which the plurality of sheets are further heated to a temperature of between 170-190°C and held at said temperature for between 4-6 minutes before being cooled to between 140-160°C.

15. A rotor body for a rotor of an axial flux machine, the rotor body having a disc-shape having an axis of rotation, the disc-shaped rotor body being formed of a fibre reinforced composite material and having an opening at the axis of rotation.
